# EUROPÄISCHE PATENTSCHRIFT

(11) **EP 2 298 990 B1**
(45) Veröffentlichungstag und Bekanntmachung des Hinweises auf die Patenterteilung: **19.09.2012**
(21) Anmeldenummer: 10172333.6
(22) Anmeldetag: 10.08.2010
(51) Int. Cl.: D21H 23/52, D21H 27/00, B65G 57/00

(54) **Einrichtung zum Bereitstellen von Zwischenlagen, Verfahren zum Palettieren**
Device for providing intermediate layers, paletting method
Dispositif de préparation de couches intermédiaires, procédé de palettisation

(30) Priorität: 27.08.2009 DE 102009043877
(43) Veröffentlichungstag der Anmeldung: 23.03.2011
(60) Teilanmeldung: 12170478.7
(73) Patentinhaber: Krones AG, 93073 Neutraubling (DE)
(72) Erfinder: Dietersberger, Martin, 83135, Schechen/Pfaffenhofen (DE); Perl, Kurt, 83253, Rimsting (DE)
(74) Vertreter: Reichert, Werner Franz

(56) Entgegenhaltungen:
- EP-A1- 0 560 112
- DE-A1-102005 011 696
- DE-U1- 20 209 571

## Beschreibung

Die vorliegende Erfindung betrifft eine Einrichtung zum Bereitstellen von Zwischenlagen, die zwischen Lagen von Gebinden aus Artikeln anordnenbar sind. Die Zwischenlagen sind vereinzelte Zuschnitte eines flexiblen Endlosbands, das durch ein Magazin bereitstellbar ist.

Die vorliegende Erfindung betrifft ferner ein Verfahren zum Palettieren von Gebinden aus Artikeln. Ein flexibles Endlosband wird zu Zwischenlagen vereinzelt, die zwischen Lagen der Gebinde angeordnet werden.

Beim Palettieren von Gebinden von Artikeln in mehreren Lagen übereinander wird üblicherweise zwischen jede Gebindelage eine Zwischenlage gelegt. Diese entspricht in den Abmaßen ungefähr dem Gebindelagenmaß und bildet für die nachfolgende Lage eine definierte Unterlage. Des Weiteren müssen die Zwischenlagen der vollen Palette ausreichend Stabilität geben, um diese während des Transports zu sichern. Die Artikel sind beispielsweise Flüssigkeitsbehälter wie Dosen, Flaschen aus Glas oder Kunststoff, insbesondere PET-Flaschen, oder Tetrapacks oder Ähnliches. Je eine Gruppe der Artikel wird zu einem Gebinde zusammengefasst, beispielsweise mittels einer Schrumpffolie.

Gemäß Stand der Technik werden entweder formstabile oder flexible Zwischenlagen aus verschiedenen Materialien eingesetzt. Formstabile Zwischenlagen, beispielsweise formstabile Kartonagen oder Kunststoffplatten, werden als fertige Zuschnitte gestapelt verarbeitet. Sie sind stabil und reißsicher beim Palettieren, jedoch sind sie schwierig zu Handhaben und Magazinieren. Andere Arten von Zwischenlagen sind flexible Folien oder flexibles Papier oder flexibler Karton, die von einem Spender geliefert werden, beispielsweise von einer Rolle abgerollt werden. Eine Rolle ist günstig und platzsparend zum Speichern von flexiblen Zwischenlagen geeignet. Flexible Zwischenlagen sind jedoch weniger reißfest.

Die am 29.10.2009 veröffentlichte deutsche Patentanmeldung DE 10 2008 020 300.9 offenbart eine Zwischenlage beim Verpacken von Getränke-Großgebinden. Die Zwischenlage weist lokale Versteifungen auf, die beispielsweise durch gezieltes Schrumpfen auf die Folie aufgebracht werden. Dies kann beispielsweise durch Anlegen eines entsprechenden IR-Strahlungsmusters an die Folie geschehen. Die Folie schrumpft an den heiß gewordenen Stellen, wodurch die zusätzlichen Versteifungen entstehen.

Das europäische Patent EP 0 560 112 B1 offenbart ein Verfahren zum Zuführen von Zwischenlagen zu einer Palette und eine Vorrichtung zum Herstellen der Zwischenlagen aus einer Endlosfolie. Die Endlosfolie wird abschnittweise entsprechend der Abmessung eines Zuschnitts für eine Zwischenlage gefördert, sodann außerhalb des Bereichs des Stapels ein Zuschnitt für eine Zwischenlage abgetrennt und diese danach weitertransportiert sowie auf dem (Teil-)Stapel bzw. der Gebindelage abgelegt.

Das europäische Patent EP 0569520 B1 offenbart ein Druckverfahren, ein Druckmaterial aus einem Endlosband und eine Druckvorrichtung, bei denen ein zu bedruckender Gegenstand mit einem kalt übertragenen Klebstoff beschichtet wird.

Die deutsche Patentanmeldung DE 10 2005 011 696 A1 offenbart eine Bogendruckmaschine mit einer Prägeeinrichtung. Über eine Rolle wird eine Endlosfolie mit einer bildgebenden Schicht bereit gestellt. Zum Trennen der bildgebenden Schicht von der Folie wird die Folie wärmebehandelt.

Das deutsche Gebrauchsmuster DE 202 09 571 U1 offenbart eine Einrichtung zum Zuführen eines Endlosbands, das von einer Rolle bereit gestellt wird. Eine Hauptrollenabwicklung ist parallel zu einer Drehachse der Rolle verfahrbar gelagert.

Die deutsche Patentanmeldung DE 10 2004 021 623 A1 offenbart eine Vorrichtung zum Vorbereiten eines fliegenden Rollenwechsels zwischen einer Rolle und einer Reserverolle sowie eine Klebebandspendeeinrichtung.

Die Europäische Patentanmeldung EP 0 563 480 A1 offenbart eine Verpackungsmaschine zum kontinuierlichen Verpacken mit einem vorgefalten Endlosband aus einem Kunstharz. Das Endlosband wird über eine Rolle bereitgestellt. Es sind Mittel vorgesehen, die die elekrostatische Ladung des Endlosbands vermindern.

Das britische Patent GB 1205 507 offenbart ein Magazin mit einer Mulde, die aus zwei unterstützenden Walzen gebildet wird. Eine Rolle, die ein Endlosband bereitstellt, liegt in einem Spalt zwischen den unterstützenden Walzen in der Mulde.

Aufgabe der Erfindung ist, eine Einrichtung zum Bereitstellen von Zwischenlagen aus einem flexiblen Endlosband anzugeben, wobei die Zwischenlagen zwischen Lagen von Gebinden aus Artikeln anordnenbar sind und derart ausgestaltet sind, dass die Lagen von Gebinden standsicher positionierbar sind.

Die obige Aufgabe wird durch eine Einrichtung gelöst, die die Merkmale des Patentanspruchs 1 umfasst.

Aufgabe der Erfindung ist ferner, ein Verfahren zum Palettieren von Gebinden aus Artikeln anzugeben, wobei ein flexibles Endlosband zu Zwischenlagen vereinzelt wird, die zwischen Gebindelagen angeordnet werden, und wobei die Zwischenlagen einfach, schnell, sicher und mit definierten Eigenschaften des Endlosbandmaterials bereitstellt bzw. herstellt werden.

Die obige Aufgabe wird durch ein Verfahren gelöst, das die Merkmale des Patentanspruchs 11 umfasst.

Bei der erfindungsgemäßen Einrichtung zum Bereitstellen von Zwischenlagen und dem erfindungsgemäßen Verfahren zum Palettieren werden die Zwischenlagen zwischen Lagen von Gebinden aus Artikeln angeordnet. Die Zwischenlagen entstehen durch Trennen von Zuschnitten von einem flexiblen Endlosband. Das Endlosband wird durch ein Magazin bereitgestellt. Erfindungsgemäß umfasst die Einrichtung mindestens ein Mittel zum zumindest abschittsweisen Reduzieren der Elastizität des Zuschnitts bzw. des Endlosbands. Das mindestens eine Mittel ist dem Magazin nachgeordnet bezüglich einer Laufrichtung des Endlosbands. Vorteilhaft dabei ist, dass ein kostengünstiges und einfach zu handhabendes flexibles Endlosband, das platzsparend auf einer Rolle oder in einem Behälter speicherbar ist, verwendet werden kann. Der Nachteil des flexiblen Endlosbands, nämlich dass die davon abgetrennten Zwischenlagen mechanisch instabile Unterlagen für Gebindelagen im Vergleich zu formstabilen Zwischenlagen bieten, wird dadurch überwunden, dass die Elastizität des Endlosbands oder des Zuschnitts verringert wird.

Die Elastizität des Endlosbandmaterials ist vor allem durch den Elastizitätsmodul bestimmt. Bei der Erfindung wird der Betrag des Elastizitätsmoduls des Endlosbands bzw. des Zuschnitts also erhöht. Die Größe und das Format des Endlosbands bzw. des Zuschnitts ändern sich im Wesentlich nicht durch die Reduktion der Elastizität.

Für die Reduktion der Elastizität sind viele Ausführungsformen denkbar. Die Mittel zur Reduktion der Elastizität stabilisieren das Endlosband bzw. die Zwischenlagen mechanisch. Durch physikalische oder chemische Prozesse ändern sich also die mechanischen Eigenschaften des Endlosbands bzw. der Zuschnitte für die Zwischenlagen, so dass diese weniger elastisch bzw. weniger flexibel sind. Beispielsweise kann sich die Materialstruktur so ändern, dass das Endlosbandmaterial weniger elastisch bzw. flexibel wird. Als Mittel zur Reduktion der Elastizität sind UV-Lichtquellen, Lasermittel, Sprühvorrichtungen für eine Aufsprühflüssigkeit, Wärmequellen und Kältequellen denkbar. Insbesondere falls das Material des Endlosbands aus Papier und/oder Karton ist, kann das Mittel zur Reduktion der Elastizität auch eine Prägewalze sein. Auch gewisse Kunststoffmaterialien können zum Versteifen durch eine Prägewalze geeignet sein. Durch Stanzen und/oder Prägen des Papiers, Kartons bzw. Kunststoffs kann dieses versteift werden. Für einen Fachmann ist offensichtlich, dass auch andere geeignete Mittel denkbar sind, die die Elastizät des Endlosbandmaterials in geeigneter Weise reduzieren. Durch unterschiedliche Aushärtevorgänge können optimierte Materialeigenschaften erzeugt werden.

Das Vereinzeln des Endlosbands in die Zuschnitte für die Zwischenlagen kann vor oder nach dem Reduzieren der Elastizität durch eine Schneideinheit erfolgen. Entsprechend ist die Schneideinheit dem mindestens einen Mittel zur Reduktion der Elastizität vor- oder nachgeordnet bezüglich der Laufrichtung des Endlosbands.

Das Magazin umfasst in einer Ausführungsform der Erfindung eine Rolle, auf der das Endlosband aufgewickelt ist und durch die das Endlosband dem mindestens einen Mittel bereitgestellt wird. Optional kann nach der Rolle und vor dem mindestens einen Mittel ein Schwerkrafttänzer vorgesehen sein. Solche Tänzer sind aus dem Stand der Technik bekannt. Sie speichern einen variabel einstellbaren Teil des Endlosbands in mäanderförmigen Bahnen. Die Begriffe "vor" und "nach" sind bezüglich der Laufrichtung des Endlosbands zu verstehen. Zusätzlich kann außerdem eine Reserverolle im Magazin vorgesehen sein. Die Reserverolle wird gegen die Rolle ausgetauscht, wenn deren Endlosband verbraucht ist.

In einer anderen Ausführungsform umfasst das Magazin einen Behälter, in dem das Endlosband geschichtet ist. Um möglichst viel Endlosband zu speichern, sollte dieses lagenweise im Behälter geschichtet werden. Das Endlosband kann lose im Behälter abgelegt sein. Der Behälter ist an mindestens einer Außenwand mit einer definierten Öffnung versehen, durch die das Endlosband einfach und staufrei herausgezogen wird. Ist der Vorrat an Endlosband verbraucht, wird der Behälter einfach gegen einen neuen getauscht. Die Lagerung der Behälter kann auf einfache Weise und platzsparend mittels Paletten erfolgen. Dazu sind die Behälter bevorzugt quaderförmig und beispielsweise aus Karton. Ein anderer Vorteil bei dieser Ausführungsform ist, dass kein vergleichsweise technisch komplizierter Tänzer, wie oben beschrieben, notwendig ist. Wie bei den Rollen kann das Endlosband beispielsweise auch hier aus einem Kunststoff, Papier, Karton oder einem vergleichbaren Material sein, das sich in ausreichender Menge in einen derartigen Behälter schichten lässt und als Zwischenlage einsetzbar ist. Weiter vorteilhaft ist, dass Behälter als Magazin bzw. Speicher passiv sind: es werden kein Antrieb, keine Steuerung und keine Pneumatik benötigt. Dadurch ergibt sich eine Energieeinsparung und Ressourcenschonung. Es werden sehr wenig, bis keine bewegten Teile verbaut, so dass der Behälter nicht im Schutzbereich der Maschine stehen muss. Der Betrieb ist platzsparend, kostengünstig, störungsarm und ohne Wartungskosten. Der Behälter kann entweder einfach entsorgt oder bei entsprechender Logistik wiederbefüllt werden. Es ist also eine einfache Inbetriebnahme und Nachrüstung möglich, insbesondere sind die Behälter einfach und ergonomisch zu handhaben beim Rüsten oder Nachfüllen. Dafür werden keine zusätzliche Werkzeuge oder Betriebhilfsmittel benötigt, im Unterschied zu Rollen als Folienspeicher, die üblicherweise durch einen Transportwagen zur Einrichtung transportiert werden. Die Lagerung und der Transport des Endlosbands im Behälter ist hygienisch und geschützt.

Die hergestellte Zwischenlage für Lagen von Gebinden aus Artikeln ist ein vereinzelter Zuschnitt eines flexiblen Endlosbands, wobei die Elastizität der fertigen Zwischenlage zumindest abschittsweise geringer ist als die Elastizität des Ausgangsmaterials des flexiblen Endlosbands. Das Material des Endlosbands kann beispielsweise eine flexible Folie, ein flexibles Papier oder ein flexibler Karton sein.

Bei dem erfindungsgemäßen Verfahren zum Palettieren von Gebinden aus Artikeln werden Zuschnitte für Zwischenlagen von dem flexiblen Endlosband abgetrennt. Die Elastizität des flexiblen Endlosbands oder der Zuschnitte wird zumindest abschittsweise reduziert. Die Dimensionen des Endlosbands bzw. der Zuschnitte bleiben im Wesentlichen erhalten.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.

Figur 1 zeigt eine perspektivische Teilansicht einer Ausführungsform der erfindungsgemäßen Einrichtung zum Bereitstellen von Zwischenlagen.

Figur 2 zeigt eine Seitenansicht des Teils der Einrichtung nach Figur 1 mit der Rolle und einer Reserverolle.

Figur 3 zeigt eine perspektivische Teilansicht einer anderen Ausführungsform der erfindungsgemäßen Einrichtung mit einem Mittel zum Reduzieren der Elastizität und einem Behälter für das Endlosband.

Figuren 4 zeigt eine Seitenansicht des Behälters nach Figur 3.

Figur 5 zeigt eine Seitenansicht einer anderen Ausführungsform eines Behälters.

Figur 6 zeigt eine Perspektivansicht des Behälters nach Figur 5.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

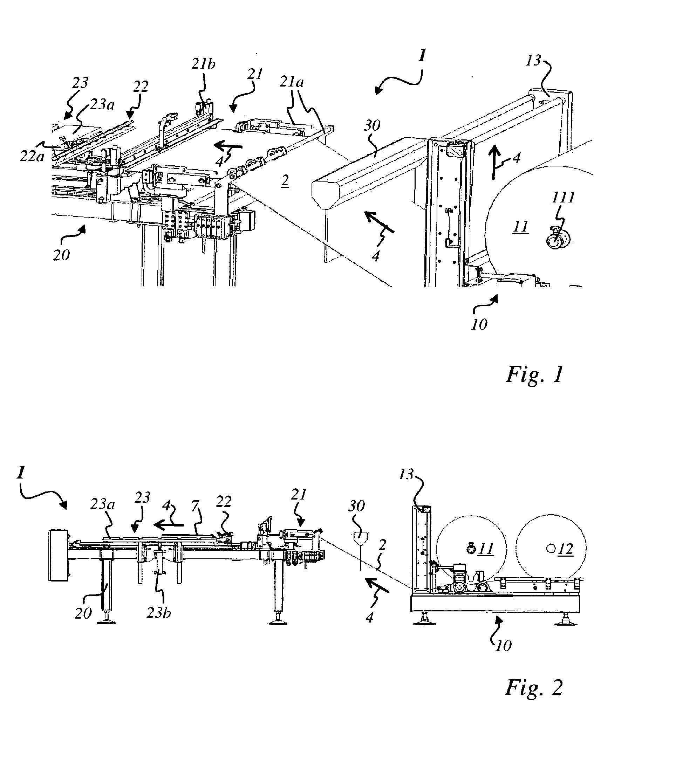

**Figur 1** zeigt eine perspektivische Teilansicht einer Ausführungsform der erfindungsgemäßen Einrichtung 1 zum Bereitstellen von Zuschnitten 7 für Zwischenlagen mit einem Mittel 30 zum zumindest abschnittsweisen Reduzieren der Elastizität. Ein Endlosband 2 wird von einem Magazin 10 dem Mittel 30 bereitgestellt und dann in einer Laufrichtung 4 des Bands 2 über eine Transfereinheit 20 weitertransportiert und in Zuschnitte 7 für die Zwischenlagen vereinzelt. Der Prozess und die Mittel zum Palettieren der Gebindelagen sind der Transfereinheit 20 in der Laufrichtung 4 nachgeordnet, jedoch in Figur 1 nicht mehr dargestellt, da dies für den Kern der Erfindung irrelevant ist.

Gemäß einer bevorzugten Ausgestaltung der Erfindung beinhaltet das Magazin 10 eine Rolle 11 und eine Reserverolle 12 zum schnellen Wechsel des Endlosbands 2, wobei die Reserverolle 12 erst in Figur 2 dargestellt ist. Die im Betrieb befindliche Rolle 11 ist um eine Welle 111 drehbar gelagert. Die Welle 111 kann motorisch angetrieben sein. Durch die Drehung der Rolle 11 wickelt sich das Endlosband 2 von der Rolle 11 ab. Das abgewickelte Endlosband 2 wird in einem Tänzer 13 zwischengespeichert. Die Position einer Schwerkraftspannrolle (nicht dargestellt) im Tänzer 13 wird über eine Laserlichtschranke (nicht dargestellt) abgefragt und der Wert an die Steuerung (nicht dargestellt) weitergegeben.

Eine bevorzugte Ausführungsform des erfinungsgemäßen Verfahrens bezüglich der Handhabung des Endlosbands 2 und der Zuschnitte 7 wird nachfolgend anhand der Figur 1 beschrieben. Das Band 2 wird zu einer Vorschub- und Schneideinheit 21 der Transfereinheit 20 gezogen. Die Vorschubeinheit 21 a greift das Band 2 und schiebt es unter der Schneideinheit 21 b, beispielsweise einem Messer, hindurch in einen Greifer 22, beispielsweise einem Klemmgreifer. Der Greifer 22 zieht nun die benötigte Bandlänge aus dem Tänzer 13 heraus und stoppt anschließend kurz. Das Messer 21 b schneidet einen Teil (Zuschnitt 7) des Endlosbands 2 ab, wobei dieser Zuschnitt 7 eine Zwischenlage bildet. Anschließend zieht der Greifer 22 den Zuschnitt 7 bzw. die Zwischenlage 7 auf Platten 23a des Hubtischs 23, welcher die jetzt fertige Zwischenlage 7 anhebt und zur Abnahme und Übergabe für die Palettierung der Gebindelagen bereitstellt.

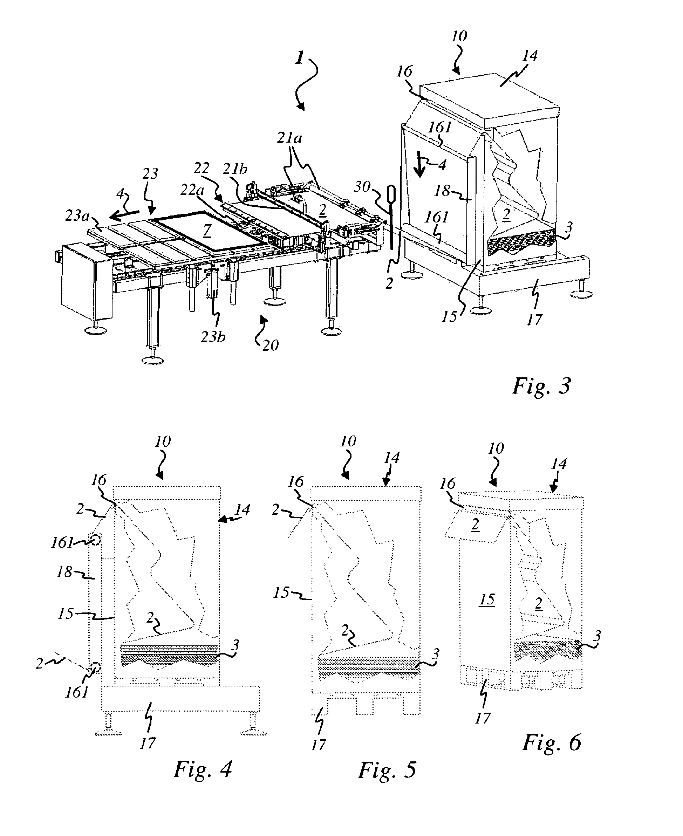

Der Greifer 22 kann währenddessen unter dem angehobenen Tisch 23 zurückfahren und nimmt den nächsten bereits wieder vorgeschobenen Zuschnitt 7 bzw. die nächste Zwischenlage 7 auf. Weitere Details zur möglichen Ausgestaltung des Hubtischs 23 und Greifers 22 sind in Figur 3 dargestellt.

Vorteilhaft bei dieser Ausführungform der Erfindung ist, dass das Magazin 10 und die Transfereinheit 20 separat und variabel aufgestellt werden können, die Bauhöhe gering ist und somit keine Störkanten mit anderen Maschinen existieren. Für einen Fachmann ist jedoch offensichtlich, dass das Magazin 10, die Transfereinheit 20 und das Mittel 30 auch anders angeordnet sein können, ohne den Schutzbereich der Erfindung zu verlassen. Beispielsweise kann das Mittel 30 nach (statt vor) der Vorschub-und Schneideinheit 21 bezüglich der Laufrichtung 4 angeordnet sein.

**Figur 2** zeigt eine Seitenansicht des Teils der Einrichtung 1 nach Figur 1, nun mit der Rolle 11 und der Reserverolle 12. Alle sonstigen Elemente sind bereits ausführlich in Figur 1 beschrieben

**Figur 3** zeigt eine perspektivische Teilansicht einer anderen Ausführungsform der erfindungsgemäßen Einrichtung 1 mit einem Mittel 30 zum Reduzieren der Elastizität. Das Magazin 10 umfasst einen Behälter 14 für das Endlosband 2, auf dessen Boden das Endlosband 2 lagenweise geschichtet ist. In einem oberen Bereich einer Außenwand 15 des Behälters 14 befinden sich eine definierte Öffnung 16, durch die das Endlosband 2 von der Endlosbandschicht 3 nach oben herausgezogen wird. Nachfolgend sind in der hier dargestellten Ausführungsform zwei erste Walzen 161 an einem Gestell 18 angeordnet, über die das Endlosband 2 zum Mittel 30 weitergeleitet wird. Das Gestell 18 ist mit dem Behälter 14 lösbar befestigt.

Der Behälter 14 ist auf einer wechselbaren und transportierbaren Palette 17 gelagert, so dass ein leerer Behälter 14 einfach und schnell gegen einen mit Endlosband 2 gefüllten Behälter 14 ausgetauscht werden kann.

Das Endlosband 2 wird aus dem Behälter 14 über die Öffnung 16 und ersten Walzen 161 bis zum Mittel 30 zum Reduzieren der Elastizität des Endlosbands 2 transportiert. Anschließend wird das Endlosband 2 weiter und entsprechend wie bei der Ausführungsform nach Figur 1 zu einer Transfereinheit 20 mit einer Vorschub- und Schneideinheit 21 transportiert, bestehend aus der Vorschubeinheit 21 a und der Schneideinheit 21 b, dann weiter zu einem Greifer 22 und von dort aus weiter zu einem Hubtisch 23.

Damit der jeweilige Zuschnitt 7 vom Hubtisch 23 für die Palettierung übergeben werden kann, während zeitgleich der Greifer 22 wieder zum Abgreifen des nächsten Zuschnitts 7 von der Vorschub- und Schneideinheit 21 bereit gestellt werden kann, wie bei Figur 1 bereits beschrieben, sind der Hubtisch 23 und der Greifer 22 gemäß einer bevorzugten Ausführungsform ausgestaltet, wie nachfolgend beschrieben. Die Platten 23a des Hubtisches 23 dienen der Ablage der Zuschnitte 7. Die Platten 23a sind in zwei Reihen parallel zur Laufrichtung 4 angeordnet. Zwischen diesen beiden Reihen kann der Greifer 22 in bzw. entgegen der Laufrichtung 4 verfahren werden. Bei gesenktem Zustand der Platten 23a wird der Greifer 22 weg von der Vorschub- und Schneideinheit 21 nach vorne in Richtung der Platten 23a und über diese verfahren. Der sich momentan im Greifer 22 befindliche Zuschnitt 7 wird dann auf die gesenkten jeweiligen Platten 23a abgelegt. Die Platten 23a werden nun angehoben, um den Zuschnitt 7 bzw. die Zwischenlage 7 für die Palettierung zu übergeben. Gleichzeitig wird der Greifer 22 unter den noch angehobenen Platten 23a weg entgegen die Laufrichtung 4 in Richtung der Vorschub- und Schneideinheit 21 verfahren. Von dort aus kann der Greifer 22 den nächsten Zuschnitt 7 greifen.

Insbesondere kann der Greifer 22 mit einer Halterung 22a ausgestattet sein, die zwischen den beiden Reihen der Platten 23a verfahrbar ist. Der Hubtisch 23 kann durch eine Hubeinheit 23b, beispielsweise einem Hubzylinder, verstellbar sein.

Wie bei der Ausführungsform nach Figur 1 kann auch bei der Ausführungsform nach Figur 3 das Mittel 30 anders ausgestaltet bzw. nach dem Magazin 10 anders angeordnet sein, ohne den Schutzbereich der Erfindung zu verlassen.

In der hier dargestellten Ausführungsform wird von dem Endlosband 2 eine Reihe von Zuschnitten 7 für die Zwischenlagen abgetrennt, da die Schneideinheit 21 b ein Messer umfasst. Das Messer 21 b schneidet quer zur Laufrichtung 4 über einer Fläche vor dem Greifer 22. Es ist auch denkbar (nicht dargestellt), dass ein weiteres Messer 21 b vorgesehen ist, das das Endlosband 2 zusätzlich und entlang der Laufrichtung 4 mittig schneidet. Dadurch entstehen zwei parallele Reihen von Zuschnitten 7 für die Zwischenlagen, die beispielsweise für die Halbpalettenpalettierung geeignet sind.

**Figur 4** zeigt eine Seitenansicht des Behälters 14 nach Figur 3. Die beiden ersten Walzen 161 sind durch das Gestell 18 verdeckt, angedeutet durch die gestrichelten Kreise.

**Figur 5** zeigt eine Seitenansicht einer anderen Ausführungsform eines Behälters 14 ohne Gestell und ohne erste Walzen 161. Auch die Palette 17 ist anders ausgestaltet.

**Figur 6** zeigt eine Perspektivansicht des Behälters 14 nach Figur 5.

Das Mittel 30 zum zumindest abschnittsweisen Reduzieren der Elastizität kann derart ausgestaltet sein, dass in dem Endlosband 2 und/oder dem Zuschnitt 7 bzw. der Zwischenlage 7 ein vordefiniertes Muster aus sich ändernden Elastizitäten erzeugt wird. Mit anderen Worten, die Elastizität wird nicht über die gesamte Fläche des Endlosbands 2 und/oder der Zwischenlage 7 verändert. Als Resultat erhält man ein Endlosband 2 und/oder einen Zuschnitt 7 bzw. eine Zwischenlage 7 mit abschittsweise reduzierter Elastizität.

### Bezugszeichenliste:

- 1: Einrichtung
- 2: Endlosband
- 3: Endlosbandschicht
- 4: Laufrichtung
- 7: Zuschnitt für Zwischenlage
- 8: Palette
- 10: Magazin
- 11: Rolle
- 111: Welle
- 12: Reserverolle
- 13: Schwerkrafttänzer (Tänzer)
- 14: Behälter
- 15: Außenwand
- 16: Öffnung
- 161: erste Walze
- 17: Palette
- 18: Gestell
- 20: Transfereinheit
- 21: Vorschub- und Schneideinheit
- 21 a: Vorschubeinheit
- 21 b: Schneideinheit
- 22: Greifer (Klemmgreifer)
- 22a: Greiferhalterung
- 23: Hubtisch
- 23a: Platte
- 23b: Hubeinheit (Hubzylinder)
- 30: Mittel zum Reduzieren der Elastizität

## Patentansprüche

1. Einrichtung (1) zum Bereitstellen von Zwischenlagen, die zwischen Lagen von Gebinden aus Artikeln anordnenbar sind, wobei die Zwischenlagen vereinzelte Zuschnitte (7) eines flexiblen Endlosbands (2) sind, das durch ein Magazin (10) bereitstellbar ist, **dadurch gekennzeichnet, dass** die Einrichtung (1) mindestens ein Mittel (30) zum zumindest abschittsweisen Reduzieren der Elastizität des flexiblen Endlosbands (2) und/oder der Zuschnitte (7) für die Zwischenlagen umfasst, wobei im Wesentlichen die Abmessungen des Endlosbands (2) oder der Zuschnitte (7) erhalten bleiben und dass das mindestens eine Mittel (30) dem Magazin (10) bezüglich einer Laufrichtung (4) des Endlosbands (2) nachgeordnet ist.

2. Einrichtung (1) nach Anspruch 1, wobei das Magazin (10) eine Rolle (11) umfasst, durch die das Endlosband (2) dem mindestens einen Mittel (30) über einen Tänzer (13) bereitstellbar ist.

3. Einrichtung (1) nach Anspruch 2, wobei eine Reserverolle (12) vorgesehen ist.

4. Einrichtung (1) nach einem der Anspruch 1, wobei das Magazin (10) einen Behälter (14) umfasst, in dem das Endlosband (2) lagenweise geschichtet ist, wobei der Behälter (14) an mindestens einer Außenwand (15) mit einer definierten Öffnung (16) versehen ist, durch die das Endlosband (2) herausziehbar ist.

5. Einrichtung (1) nach einem der Ansprüche 1 bis 4, wobei das mindestens eine Mittel (30) eine UV-Lichtquelle umfasst.

6. Einrichtung (1) nach einem der Ansprüche 1 bis 4, wobei das mindestens eine Mittel (30) Lasermittel umfasst.

7. Einrichtung (1) nach einem der Ansprüche 1 bis 4, wobei das mindestens eine Mittel (30) eine Sprühvorrichtung mit einer Aufsprühflüssigkeit umfasst.

8. Einrichtung (1) nach einem der Ansprüche 1 bis 4, wobei das mindestens eine Mittel (30) eine Wärmequelle umfasst.

9. Einrichtung (1) nach einem der Ansprüche 1 bis 4, wobei das mindestens eine Mittel (30) eine Kältequelle umfasst.

10. Einrichtung (1) nach einem der Ansprüche 1 bis 4, wobei das mindestens eine Mittel (30) eine Prägewalze umfasst.

11. Verfahren zum Palettieren von Gebinden aus Artikeln, wobei ein flexibles Endlosband (2) zu Zuschnitten (7) für Zwischenlagen vereinzelt wird, die zwischen Lagen der Gebinde angeordnet werden, **dadurch gekennzeichnet, dass** die Elastizität des flexiblen Endlosbands (2) und/oder der Zuschnitte (7) zumindest abschittsweise reduziert wird und die Dimensionen des Endlosbands (2) und/oder der Zuschnitte (7) im Wesentlichen erhalten bleiben.

12. Verfahren nach Anspruch 11 mit den folgenden Schritten:
• Bereitstellen des Endlosbands (2) durch ein Magazin (10);
• Ziehen des Endlosbands (2) zu einer Vorschub- und Schneideinheit (21, 21 a, 21 b) einer Transfereinheit (20), die dem Magazin (10) nachgeordnet ist;
• Greifen des Endlosbands (2) mittels der Vorschubeinheit (21 a) und Schieben des Endlosbands (2) unter der Schneideinheit (21 b) hindurch in einen Greifer (22);
• Herausziehen einer für die jeweilige Zwischenlage benötigten Länge des Endlosbands (2) aus dem Magazin (10) mittels des Greifers (22) und anschließendes Stoppen des Greifers (22);
• Abschneiden eines jeweiligen Zuschnitts (7) des Endlosbands (2) mittels der Schneideinheit (21 b);
• Ziehen des jeweiligen Zuschnitts (7) auf einen Hubtisch (23) der Transfereinheit (20) mittels des Greifers (22);
• Anheben des jeweiligen Zuschnitts (7) mittels des Hubtischs (23);
• Abnehmen und Übergeben des jeweiligen Zuschnitts (7) vom Hubtisch (23) für die Palettierung der Gebindelagen und Zurückfahren des Greifers (22) währenddessen unter dem angehobenen Hubtisch (23); und
• Aufnehmen des nächsten bereits wieder vorgeschobenen Zuschnitts (7) mittels des Greifers (22).

## Claims

1. A facility (1) for providing intermediate layers which are arranged between layers of packs of articles, wherein the intermediate layers are individual cut-offs (7) from a flexible continuous band (2), which can be made available by a magazine (10), **characterized in that** the facility (1) comprises at least one means (30) that reduces at least section by section the elasticity of the flexible continuous band (2) and/or comprises the cut-offs (7) for the intermediate layers, wherein the dimensions of the continuous band (2) or the cut-offs (7) are essentially maintained and that the at least one means (30) can be arranged downstream of the magazine (10) with reference to a direction of movement (4) of the continuous band (2).

2. The facility (1) according to Claim 1, wherein the magazine (10) comprises a roll (11) through which the continuous band (2) can be made available to the at least one means (30) via a dancing roller (13).

3. The facility (1) according to Claim 2, wherein a reserve roll (12) is provided.

4. The facility (1) according to Claim 1, wherein the magazine (10) comprises a container (14) in which the continuous band (2) is stratified in layers, wherein the container (14) has a defined opening (16) on at least one outer wall (15) through which the continuous band (2) can be removed.

5. The facility (1) according to any one of Claims 1 to 4, wherein the at least one means (30) comprises a source of UV light.

6. The facility (1) according to any one of Claims 1 to 4, wherein the at least one means (30) comprises laser means.

7. The facility (1) according to any one of Claims 1 to 4, wherein the at least one means (30) comprises a spraying device with a spray-on liquid.

8. The facility (1) according to any one of Claims 1 to 4, wherein the at least one means (30) comprises a source of heat.

9. The facility (1) according to any one of Claims 1 to 4, wherein the at least one means (30) comprises a source of cold.

10. The facility (1) according to any one of Claims 1 to 4, wherein the at least one means (30) comprises an embossing roller.

11. A process for palletizing packs of articles, wherein a flexible continuous band (2) is cut up into individual cut-offs (7) to be used as intermediate layers which are arranged between layers of packs, **characterized in that** the elasticity of the flexible continuous band (2) and/or the cut-offs (7) is reduced at least section by section and the dimensions of the continuous band (2) and/or the cut-offs (7) are essentially maintained.

12. A method according to Claim 11 with the following steps:
• providing the continuous band (2) by a magazine (10);
• pulling the continuous band (2) to a feed and cutting unit (21, 21 a, 21 b) of a transfer unit (20), which is located downstream of the magazine (10);
• gripping the continuous band (2) by means of the feed unit (21 a) and pushing of the continuous band (2) through the cutting unit (21 b), under the same, into a gripper (22);
• pulling out a required length of continuous band (2) for the respective intermediate layer from the magazine (10) by means of the gripper (22) and subsequent stopping of the gripper (22);
• cutting a respective cut-off (7) from the continuous band (2) by means of the cutting unit (21 b);
• pulling the respective cut-off (7) onto a lifting table (23) of the transfer unit (20) using the gripper (22);
• raising the respective cut-off (7) by means of the lifting table (23);
• removing and handing over the respective cut-off (7) from the lifting table (23) for palletizing the pack layers and withdrawing the gripper (22) during this under the raised lifting table (23); and
• taking up the next cut-off (7), which has already been pushed forward again, by means of the gripper (22).

## Revendications

1. Equipement (1) destiné à fournir des couches intermédiaires disposées entre des couches de packs d'articles, étant donné que les couches intermédiaires sont des coupures (7) individuelles d'une bande sans fin (2) flexible qui peut être délivrée par un magasin (10), **caractérisé en ce que** l'équipement (1) comprend au moins un moyen (30) pour la réduction au moins section par section de l'élasticité de la bande sans fin (2) flexible et/ou des coupures (7) pour les couches intermédiaires, étant donné que les dimensions de la bande sans fin (2) ou des coupures (7) sont essentiellement préservées, et **en ce que** le au moins un moyen (30) est disposé en aval du magasin (10) par rapport à un sens de déplacement (4) de la bande sans fin (2).

2. Equipement (1) selon la revendication 1, étant donné que le magasin (10) comprend un rouleau (11) au moyen duquel la bande sans fin (2) peut être délivrée à l'au moins un moyen (30) par l'intermédiaire d'un rouleau tendeur (13).

3. Equipement (1) selon la revendication 2, étant donné qu'un rouleau de réserve (12) est prévu.

4. Equipement (1) selon la revendication 1, étant donné que le magasin (10) comprend un conteneur (14), dans lequel la bande sans fin (2) est stratifiée couche par couche, étant donné que le conteneur (14) est doté à au moins une paroi extérieure (15) d'un orifice (16) défini à travers lequel la bande sans fin (2) peut être extraite.

5. Equipement (1) selon l'une quelconque des revendications 1 à 4, étant donné que le au moins un moyen (30) comprend une source de lumière ultraviolette.

6. Equipement (1) selon l'une quelconque des revendications 1 à 4, étant donné que le au moins un moyen (30) comprend des moyens laser.

7. Equipement (1) selon l'une quelconque des revendications 1 à 4, étant donné que le au moins un moyen (30) comprend un dispositif de pulvérisation avec un liquide à pulvériser.

8. Equipement (1) selon l'une quelconque des revendications 1 à 4, étant donné que le au moins un moyen (30) comprend une source de chaleur.

9. Equipement (1) selon l'une quelconque des revendications 1 à 4, étant donné que le au moins un moyen (30) comprend une source de froid.

10. Equipement (1) selon l'une quelconque des revendications 1 à 4, étant donné que le au moins un moyen (30) comprend un rouleau gaufreur.

11. Méthode de palettisation de packs d'articles, étant donné que qu'une bande sans fin (2) flexible est séparée en coupures (7) pour des couches intermédiaires à disposer entre des couches des packs, **caractérisée en ce que** l'élasticité de la bande sans fin (2) flexible et/ou des coupures (7) est réduite au moins section par section et les dimensions de la bande sans fin (2) et/ou des coupures (7) sont essentiellement préservées.

12. Méthode selon la revendication 11 avec les étapes suivantes :
• mise à disposition de la bande sans fin (2) par l'intermédiaire d'un magasin (10) ;
• tirage de la bande sans fin (2) vers une unité d'avance et de coupe (21, 21 a, 21 b) d'une unité de transfert (20) qui est disposée en aval du magasin (10) ;
• prise de la bande sans fin (2) au moyen de l'unité d'avance (21a) et poussée de la bande sans fin (2) en dessous de l'unité de coupe (21 b), à travers cette dernière, dans un grappin (22) ;
• extraction du magasin (10) d'une longueur de bande sans fin (2) nécessaire pour la couche intermédiaire respective au moyen du grappin (22), puis arrêt du grappin (22) ;
• découpage d'une coupure (7) respective de la bande sans fin (2) au moyen de l'unité de coupe (21 b) ;
• tirage de la coupure (7) respective sur une table élévatrice (23) de l'unité de transfert (20) au moyen du grappin (22) ;
• levée de la coupure (7) respective au moyen de la table élévatrice (23) ;
• enlèvement et transfert de la coupure (7) respective de la table élévatrice (23) pour la palettisation des couches de packs et retour du grappin (22) pendant ce temps sous la table élévatrice (23) relevée ; et
• collecte de la prochaine coupure (7), déjà avancée, au moyen du grappin (22).
